# EUROPÄISCHE PATENTSCHRIFT

(11) **EP 1 335 547 B1**
(45) Veröffentlichungstag und Bekanntmachung des Hinweises auf die Patenterteilung: **16.04.2008**
(21) Anmeldenummer: 03002998.7
(22) Anmeldetag: 11.02.2003
(51) Int. Cl.: H04L 12/64, H04L 12/66, H04M 7/00

(54) **Verfahren und Gateway zur Konvertierung von Sprach- und/oder Videodaten zwischen einem leitungsvermittelnden und einem paketorientierten Datennetz**
Method and gateway for the conversion of voice and/or videodata between a circuit switched and a packet switched data network
Procédé et passerelle pour la conversion de données vocaux et/ou video entre un réseau de données à commutation de circuit et un réseau à commutation de paquet

(30) Priorität: 11.02.2002 DE 10205574
(43) Veröffentlichungstag der Anmeldung: 13.08.2003
(73) Patentinhaber: Tenovis GmbH & Co. KG, 60326 Frankfurt am Main (DE)
(72) Erfinder: Schulmeyer, Peter, 63225 Langen (DE); Brandt, Hubertus, 64839 Münster (DE)
(74) Vertreter: Tergau & Pohl Patentanwälte

(56) Entgegenhaltungen:
- EP-A- 0 669 742
- WO-A-02/21780
- WO-A-99/49624
- US-A1- 2001 055 308

## Beschreibung

Die Erfindung betrifft ein Verfahren gemäß dem Oberbegriff des Patentanspruches 1 sowie ein Gateway zur Durchführung des Verfahrens nach Anspruch 2.

Mit dem Aufkommen paketorientierter Datennetze, wie beispielsweise dem Internet, ist eine im Vergleich zur leitungsvermittelnden Telekommunikation (circuit switching) relativ preisgünstige Kommunikation möglich. Dies liegt insbesondere in einer verbesserten Ausnutzbarkeit einer Verbindung begründet, da die in einem Telekommunikationsnetz vorhandenen Ressourcen, insbesondere Übertragungskapazitäten, mittels einer paketorientierten Übertragung (packet switching) weitaus effizienter genutzt werden können als dies bei einer leitungsvermittelnden Übertragung möglich ist.

Als paketorientierte Übertragungsverfahren für Sprache sind beispielsweise VoFR (Voice over Frame Relay) oder VoIP (Voice over IP) bekannt. Hierbei werden Sprachdaten digitalisiert, einer Quellencodierung und vorzugsweise einer Kanalcodierung unterzogen und auf Datenpakete verteilt, die dann über das Internet übermittelt werden. Insbesondere VoIP wird eine wesentliche Bedeutung für die zukünftige Sprachkommunikation vorausgesagt.

Bei dem paketorientierten Übertragungsverfahren werden die zu transportierenden Daten in einzelne Datenpakete aufgeteilt, wobei jedes Datenpaket einen Adresscode erhält, der den Empfänger der Übertragung kennzeichnet. Die einzelnen Datenpakete werden dann unabhängig voneinander übertragen - dabei können sie sogar verschiedene Übertragungswege nutzen. Das Prinzip des packet switching ist in verschiedenen Standards definiert, der bekannteste Standard ist in der ITU-T-Empfehlung x.25 beschrieben.

Die komprimierte Sprache stellt dabei den Nutzdatenbereich der IP-Pakete dar, während die gewählte Rufnummer in den IP-Adressen umgesetzt wird, die als Zielinformation in den IP-Header gelangen. Über mehrere im Datennetz verteilte Netzknoten werden nun die IP-Pakete bis zur Gegenstelle der Sprachverbindung transportiert. Die Gegenstelle speichert die eingehenden Pakete und setzt sie wieder in der richtigen Reihenfolge zusammen. An der Gegenstelle wird den Paketen die Sprachinformation entnommen, die dann einer Codierungseinrichtung zugeführt wird, in der die Information dann in invers quellen- und kanalcodiert und anschließend über geeignete Hardware hörbar gemacht wird.

Im Backbone-Bereich werden Telefongespräche und Internetdaten schon länger über gleiche Netze, beispielsweise ATM, übertragen. In den meisten Unternehmen werden die Gespräche noch über Telefonanlagen geführt, welche an das öffentliche Telefonnetz angeschlossen sind. Die Telefonübertragung erfolgt dann auch über ein privates Kommunikationsnetz, beispielsweise über ein Local Area Network (LAN), welches über eine Standleitung mit einem Internetserviceprovider (ISP) und eventuell mit einer anderen Filiale verbunden ist. Die Konvergenz von Daten und Sprache erschließt Internet-Providern neue Geschäftsfelder, in denen sie in den nun offenen Telefonmarkt als Serviceprovider einsteigen. Insbesondere Firmen mit Außenstellen in der ganzen Welt werden somit Möglichkeiten zur Kostensenkung geboten.

Es lassen sich drei große Gebiete für den Einsatz von paketorientierten Übertragungsverfahren von Sprache und/oder Video, beispielsweise über Voice over IP, festmachen:
- Telefonieren von VoIP-PC zu VoIP-PC über ein Datennetz,
- Kommunikation zwischen normalen Telefonen oder Faxgeräten und VoIP-PCs, und
- Verbindung normaler Telefongeräte über das paketorientierte Datennetz.

Das Spektrum lässt sich jedoch erweitern - so lassen sich Multikonferenzen, Bildtelefonie sowie Datenübertragung und Faxe während eines Gesprächs über eine Netzinfrastruktur abwickeln. So kann beispielsweise ein Benutzer im Internet über einen Link auf einer Webseite ein Gespräch mit einem Support-Anbieter aufbauen. Ebenso wäre es möglich, sich über eine Hyperlink-Auswahl schriftliche Unterlagen zu einem Angebot im Internet zuschicken zu lassen.

Bei dem Übergang von dem leitungsvermittelnden Datennetz zu dem paketorientierten Datennetz kommen Gateways zum Einsatz. Unter einem Gateway versteht man eine Hard- und Software, die daran angepasst sind, verschiedene Netze miteinander zu verbinden oder an andere Netze durch Protokollumsetzung anzuschließen. Ein Gateway hat die Aufgabe, Nachrichten von einem Rechnernetz in ein anderes zu übermitteln, wofür vor allem die Übersetzung der Kommunikationsprotokolle notwendig ist. Es kann also auch als eine Art Protokollkonverter betrachtet werden.

Die Dokumente WO 02/21780 A1 und 2001/0055308 offenbaren Gateways zur Datenkonvertierung zwischen einem leitungsorientierten und einem paketorientierten Datennetz.

Ein Gateway ist jeweils auf der niedrigsten gemeinsamen Schicht der miteinander zu verbindenden Netze angesiedelt, das kann im Extremfall die Schicht 7 des OSI-Referenzmodells sein. Es kann dabei beide Protokolle der unterschiedlichen Datennetze vollständig umsetzen und ist in beiden Datennetzen ein adressierbarer Netzknoten. Die vollständige Umwandlung beinhaltet die Umsetzung der Adressen, der Formate, die Konvertierung der Codierung, die Zwischenpufferung der Datenpakete, die Paketbestätigung sowie die Flusskontrolle und die Geschwindigkeitsanpassung.

Die unterschiedlichen Funktionen werden dabei von einer Prozessoreinheit ausgeführt. Bei diesen Prozessoreinheiten handelt es sich um digitale Signalprozessoren DSP. Digitale Signalprozessoren werden überall dort eingesetzt, wo aufwendige Signalverarbeitungsaufgaben mit hoher Effizienz ausgeführt werden sollen. Die Einsatzfelder für digitale Signalprozessoren haben charakteristische Eigenschaften. Es werden sich oft wiederholende numerische Berechnungen durchgeführt, bei denen hohe Anforderungen an die Genauigkeit gestellt werden. Da Rechenoperationen, beispielsweise Multiplizieren und Addieren, eine schnelle Verfügbarkeit der zur Berechnung benötigten Daten verlangen, sind DSPs in der Lage, Speicherzugriffe auf hintereinanderliegende Speicherbereiche schnell durchführen zu können. DSPs sind somit Prozessoren, die speziell auf Aufgabenbereiche abgestimmt sind, die in der digitalen Signalverarbeitung vorliegen, d.h. die mathematische Manipulation digital repräsentierter Signale.

Bei den in den paketorientierten Übertragungsverfahren angebotenen DSP Lösungen handelt es sich um kanalorientierte Anordnungen, d.h. alle notwendigen Funktionen sind in nur einem DSP untergebracht. Zu diesen Funktionen zählt u.a. ein Quellencodierer, ein Echokompensator, ein Mischer, etc.

Es erweist sich bei den bekannten Implementierungen von Gateways mit kanalorientierter DSP-Struktur (unter anderem) als nachteilig, dass eine Konferenzmischung nicht einheitenübergreifend möglich ist, d.h., dass sie nur innerhalb der Kanäle des eigenen DSP realisiert werden können. Nicht benötigte Funktionen, beispielsweise eine Hörtongenerierung, verbrauchen somit in der Einheit unnötig Ressourcen. Da grundlegende Funktionen einer Vermittlungsanlage in jeder Einheit vorhanden sein müssen, ergibt sich insgesamt eine suboptimale Ressourcennutzung.

Der Erfindung liegt daher die Aufgabe zugrunde, ein Verfahren der gattungsgemäßen Art und ein entsprechendes Gateway dahingehend weiterzubilden, daß die benötigten Grundfunktionen sowie wünschenswerte zusätzliche Leistungsmerkmale kostengünstig durchgeführt werden.

Diese Aufgabe wird durch ein Verfahren mit den Merkmalen von Anspruch 1 sowie durch ein Gateway nach Anspruch 2 gelöst. Bevorzugte Ausgestaltungen der Erfindung ergeben sich aus den abhängigen Ansprüchen.

Ein wesentlicher Punkt der Erfindung liegt darin, dass eine Paketgenerierung (VoIP) und eine Echokompensierung kanalweise getrennt auf jeweils separaten Prozessoreinheiten und eine Vermittlungsfunktion (PBX) kanalübergreifend auf einer separaten Prozessoreinheit ausgeführt werden.

Diese erfindungsgemäße Architektur der Prozessoreinheiten führt zu drei wesentlichen Vorteilen. Als ganz wesentlicher Vorteil ist zu sehen, dass die Vermittlungsfunktionen nun für alle Teilnehmer (LAN/VoIP- und PBX-Teilnehmer) zentral und ohne Überdimensionierung der entsprechenden Ressourcen zur Verfügung gestellt werden. Die auf der zentralen Prozessoreinheit ausgeführte Vermittlungsfunktion umfasst eine Koppelfunktion und/oder eine Hörtonfunktion und/oder eine Sprachansage und/oder eine Konferenzfunktion und/oder eine Toneinmischung.

Kanalübergreifende Komfortfunktionen, die nur einmal benötigt werden, beispielsweise Hörtöne, Ansagen, Toneinmischungen, etc., werden zentral in der einen, der Vermittlungsfunktion zugeordneten Prozessoreinheit ausgeführt. Auch brauchen diese Funktionen nicht jeweils separat gespeichert werden. Daraus resultiert eine Ressourcenersparnis, wodurch Kosten gespart werden.

Des weiteren sind Konferenzen für und zwischen allen Teilnehmern (VoIP- und PBX-Teilnehmer) möglich. Schließlich ermöglicht das Koppelfeld das Verbinden aller Teilnehmer in einem leitungsvermittelnden- und paketorientierten Datennetz.

Die einzelnen Prozessoreinheiten sind insbesondere jeweils separat als digitale Signalprozessoren (DSP) ausgebildet.

Die auf einer separaten Prozessoreinheit ausgeführte Paketgenerierung enthält eine Quellencodierung und/oder eine Sprachdetektion und/oder eine Geräuschgenerierung und/oder eine Paketumwandlung.

Die Quellencodierung wird dabei mittels eines Audio-Codecs ausgeführt. Dieser codiert die Sprachsignale vom Mikrofon zur Übertragung über das sendende Terminal und decodiert die empfangenen Audiosignale, welche zum Lautsprecher des Terminals geschickt werden. Als Audio-Codec werden dabei insbesondere die Codecs nach dem Standard G.711 oder G.726 vorgesehen. Soll ein Terminal beispielsweise auch Videoströme verarbeiten, so sollte die entsprechende Prozessoreinheit die H.261-oder H.263-Spezifikation unterstützen. Eine Datenunterstützung erfolgt über T.120, die es den Teilnehmern einer Multimedia-Konferenz erlaubt, gemeinsam auf Daten zugreifen zu können.

Neben der Quellencodierung lässt sich eine weitere Datenreduktion mittels der Sprachaktivitätserkennung (voice activity detection VAD) erreichen, mit der sich eine Einsparung der Bandbreite von bis zu 50% ermöglichen lässt. Mit dieser Technik können Geräusche von Sprache unterschieden und Gesprächspausen erkannt werden, wobei eine Übertragung von Sprachpaketen in diesen Fällen unterdrückt wird. Als Gegenstück dazu befindet sich auf der Empfängerseite ein Geräuschgenerator (Comfort Noise Generation CNG), der bei Übertragungspausen lokal Geräusche erzeugen kann, so dass den Teilnehmer das Gefühl einer aktiven Verbindung vermittelt wird.

Vorzugsweise werden die Prozessoreinheiten zur Paketgenerierung und Echokompensierung auf separaten Funktionsbänken angeordnet, die unabhängig voneinander modular erweiterbar sind. Dabei lassen sich Erweiterungen, beispielsweise weitere Komfortfunktionen, schnell und einfach durch Hinzufügen jeweiliger Submodule ausführen. Bedingt durch die oben beschriebene Architektur, wird eine Skalierung in getrennten Einheiten ermöglicht, wodurch eine große Kanalanzahl realisiert werden kann.

Die Erweiterung kann vorzugsweise mit (jeweils) mindestens einem Submodul erfolgen, das in mindestens eine korrespondierende, auf einer Basisleiterplatte vorgesehene elektrische Kontakteinrichtung eingeführt wird. Somit ist das bzw. jedes Submodul elektrisch mit der Basisleiterplatte verbunden. Auf der Basisleiterplatte kann eine bestimmte Anzahl von Steckplätzen für die Erweiterung der Paketgenerierung und weiterhin eine Anzahl Steckplätze für die Erweiterung der Echokompensierung vorgesehen werden.

Grundsätzlich können beispielsweise auch die Koppelfunktion, die Hörtonfunktion und/oder die Sprachansage und die Konferenzfunktion und/oder die Toneinmischung separat auf jeweils getrennten Prozessoreinheiten ausgeführt werden. Daraus resultiert eine noch verbesserte Ressourcenausnutzung und somit Kostenersparnis.

In einer bevorzugten Ausführung ist das (oder jedes) Submodul mit einer unterschiedlichen Anzahl von Prozessoreinheiten, die in Abhängigkeit zu der Kanalanzahl steht, bestückt. Somit lässt sich eine Erweiterung der Kanalanzahl schnell und einfach realisieren.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
- Fig. 1: eine schematische Darstellung einer Basisleiterplatte und mehrere Zusatzmodule, die jeweils mit digitalen Signalprozessoren (DSP) bestückt sind, und
- Fig. 2: schematisch den Aufbau eines digitalen Signalprozessors.

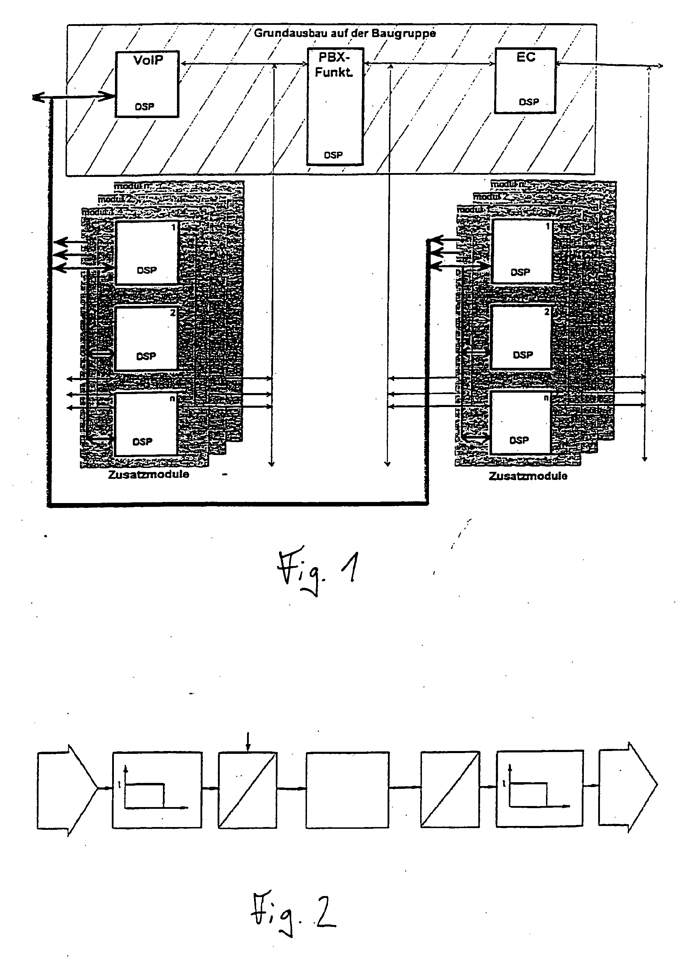

Fig. 1 zeigt in einer schematischen Darstellung eine Anordnung einer Basisleiterplatte mit mehreren erweiterbaren Zusatzmodulen. Hierbei sind die Paketgenerierung, die Vermittlungsfunktion und die Echokompensation auf separate digitale Signalprozessoren verteilt. Um eine verbesserte Ressourcenausnutzung zu erhalten, wird die Vermittlungsfunktion dabei kanalübergreifend auf einer Prozessoreinheit ausgeführt. Die drei DSPs sind jeweils über eine PCM-Verbindung miteinander verbunden. Der DSP zur Echokompensierung ist ebenfalls über die PCM-Verbindung mit einem PBX-Teilnehmer verbunden. Die drei DSPs sind über die PCM-Verbindung mit mehreren, auf Submodulen vorgesehenen, weiteren DSPs verbunden.

Die Submodule können mit einer unterschiedlichen Anzahl von DSPs (1-n) bestückt werden. Diese unterschiedlichen DSPs sind jeweils mit einer Packet-/Host-Bus Anbindung, die zur paketorientierten Datenübertragung ausgebildet ist, mit dem Teilnehmer verbunden. Über diesen Bus kommuniziert ebenfalls der VoIP-DSP.

Die in der Fig. 1 gezeigte Ausführung hat den Vorteil, dass der Bedarf an Rechenleistung individuell in Anpassung an die Ausnutzung optimal und damit kostengünstig durch das Stecken der notwendigen Anzahl von Submodulen gedeckt werden kann.

Fig. 2 zeigt den prinzipiellen Aufbau eines DSP-Systems, welches, verglichen mit dem Integrationsgrad heutiger Prozessoren, mit nur wenigen Bauteilen auskommt. Ein zeit- und wertekontinuierliches Analogsignal wird so umgewandelt, dass am Eingang des DSP ein digitales Signal vorliegt. Der Tiefpass am Eingang des A/D-Wandlers sorgt dafür, dass das Abtasttheorem stets erfüllt ist. Das Abtasttheorem nach Shannon besagt, dass eine Abtastfrequenz fₐ mindestens doppelt so groß wie die größte im Spektrum des Eingangssignals vollkommene Frequenz fₘₐₓ gewählt werden muß. Somit kann das Eingahgssignal am Ausgang des Systems exakt rekonstruiert werden. Die eingehenden Messwerte (Samples) werden vom DSP verarbeitet und am Ausgang zum D/A-Wandler geführt. Am Ausgang des Tiefpasses liegt nach der D/A-Wandlung wieder ein zeit- und wertekontinuierliches Analogsignal an.

Die Ausführung der Erfindung ist nicht auf das beschriebene Beispiel und die oben hervorgehobenen Aspekte beschränkt, sondern im Rahmen der Ansprüche ebenso in einer Vielzahl von Abhandlungen möglich, die im Rahmen fachgemäßen Handelns liegen.

## Patentansprüche

1. Verfahren zur Konvertierung von Sprach- und/oder Videodaten zwischen einem leitungsorientierten und einem paketorientierten Datennetz in einem zwischen den Datennetzen angeordneten Gateway (PBX),
**dadurch gekennzeichnet, dass**
eine Paketgenerierung kanalweise und
eine Echokompensierung kanalweise
jeweils für sich auf separaten Prozessoreinheiten (DSP), insbesondere digitalen Signalprozessoren, ausgeführt werden, wobei Paketgenerierung und Echokompensierung unabhängig voneinander modular erweiterbar sind, und
eine Vermittlungsfunktion kanalübergreifend auf einer weiteren separaten Prozessoreinheit ausgeführt wird.

2. Gateway zur Durchführung des Verfahrens nach Anspruch 1,
**dadurch gekennzeichnet, dass**
mindestens je zwei Prozessoreinheiten zur (DSP) kanalweisen Paketgenerierung und zur kanalweisen Echokompensierung auf separaten Funktionsbänken angeordnet sind,
die Funktionsbänke zur Erweiterung der Funktionen zur Paketgenerierung und Echokompensierung unabhängig voneinander modular erweiterbar sind und
eine zentrale, kanalübergreifend wirkende weitere Prozessoreinheit für die Vermittlungsfunktion vorgesehen ist.

3. Gateway nach Anspruch 2,
**dadurch gekennzeichnet, dass**
die Funktionsbänke unabhängig voneinander mit mindestens einem Submodul erweiterbar sind.

4. Gateway nach Anspruch 3,
**dadurch gekennzeichnet, dass**
das oder jedes Submodul mit einer Basisleiterplatte verbunden ist.

5. Gateway nach Anspruch 4,
**dadurch gekennzeichnet, dass**
das oder jedes Submodul mittels einer auf der Basisleiterplatte vorgesehenen elektrischen Kontakteinrichtung mit der Basisleiterplatte verbunden ist.

6. Gateway nach einem der Ansprüche 3 bis 5,
**dadurch gekennzeichnet, dass**
das oder jedes Submodul in Abhängigkeit der Kanalanzahl mit einer unter-schiedlichen Anzahl von Prozessoreinheiten (DSP) bestückt ist.

## Claims

1. Method for converting voice and/or video data between a line-oriented and a packet-oriented data network in a gateway (PBX) arranged between the data networks,
**characterized in that**
a packet generation is effected channel by channel and
an echo compensation is effected channel by channel,
each of them independently on separate processor units (DSP), in particular digital signal processors, the packet generation and the echo compensation being modularly extensible independently of each other, and
a cross-channel call-processing function is carried out on a further separate processor unit.

2. Gateway for carrying out the method according to claim 1,
**characterized in that**
at least two processor units (DSP) each for a packet generation channel by channel and for an echo compensation channel by channel are arranged on separate function banks,
the function banks are modularly extensible independently of each other for the extension of the functions for packet generation and echo compensation, and
an additional central processor unit (DSP) with cross-channel action for the call-processing function is provided.

3. Gateway according to claim 2,
**characterized in that**
the function banks are extensible independently of each other by at least one submodule.

4. Gateway according to claim 3,
**characterized in that**
the, or each, submodule is connected with a basic circuit board.

5. Gateway according to claim 4,
**characterized in that**
the, or each, submodule is connected with the basic circuit board by means of an electrical contact device provided on the basic circuit board

6. Gateway according to any of claims 3 to 5,
**characterized in that**
the, or each, submodule is assembled with a different number of processor units (DSP), as a function of the number of channels.

## Revendications

1. Méthode pour convertir des données vocales et/ou données vidéo entre un réseau de données orienté ligne et un réseau de données orienté paquet dans une passerelle (PBX) aménagée entre les réseaux de données,
**caractérisée en ce**
**qu'**une génération de paquets est effectuée canal par canal et
**qu'**une compensation d'écho est effectuée canal par canal,
à chaque fois indépendemment sur des unités processeur (DSP) séparées, en particulier des processeurs digitaux de signaux, la génération de paquets et la compensation d'écho étant extensibles de façon modulaire indépendemment l'une de l'autre, et
**qu'**une fonction de commutation relative à plusieurs canaux est exécutée sur une autre unité processeur séparée.

2. Passerelle pour exécuter la méthode selon la revendication 1,
**caractérisée en ce**
**qu'**au moins deux unités processeur (DSP) à chaque fois pour une génération de paquets canal par canal et pour une compensation d'écho canal par canal sont aménagées sur des banques de fonctions séparées,
**que** les banques de fonctions sont extensibles de façon modulaire indépendemment l'une de l'autre pour l'extension des fonctions pour la génération de paquets et la compensation d'écho, et
**qu'**une unité processeur (DSP) centrale additionnelle à action relative à plusieurs canaux pour la fonction de commutation est prévue.

3. Passerelle selon la revendication 2,
**caractérisée en ce**
**que** les banques de fonctions sont extensibles indépendemment l'une de l'autre par au moins un sous-module.

4. Passerelle selon la revendication 3,
**caractérisée en ce**
**que** le, ou chaque, sous-module est connecté avec une carte imprimée de base.

5. Passerelle selon la revendication 4,
**caractérisée en ce**
**que** le, ou chaque, sous-module est connecté avec la carte imprimée de base au moyen d'un dispositif de contact électrique.

6. Passerelle selon l'une quelconque des revendications 3 à 5,
**caractérisée en ce**
**que** le, ou chaque, sous-module est équipé d'un nombre différent d'unités processeur (DSP), en fonction du nombre de canaux.
